# EUROPEAN PATENT SPECIFICATION

(11) **EP 2 019 555 B1**
(45) Date of publication and mention of the grant of the patent: **03.03.2010**
(21) Application number: 07301271.8
(22) Date of filing: 25.07.2007
(51) Int. Cl.: H04Q 3/00, H04L 29/12

(54) **Bridging enterprise advanced communication systems through the public Internet**
Überbrückung von erweiterten Unternehmenskommunikationssystemen über das öffentliche Internet
Mise en communication de systèmes de communication avancés d'entreprise par Internet public

(43) Date of publication of application: 28.01.2009
(73) Proprietor: Alcatel Lucent, 75008 Paris (FR)
(72) Inventor: Rey, Jean-François, 29200 Brest (FR); Litteaut, Jacques, 78160 Marly le Roy (FR)
(74) Representative: Schneider, Sandra

(56) References cited:
- EP-A- 1 613 024
- WO-A-2004/063843
- WO-A-2005/018192
- US-B2- 7 002 912

## Description

### Technical field

The present invention relates to a method for transmitting end-to-end signalling between communication nodes separated by a network. Furthermore, it is related to a computer readable medium comprising code to be executed on a communication node for transmitting end-to-end signalling codes to another communication node separated by a network while minimizing provisioning effort on the network.

### Background of the invention

Enterprise communication systems are interconnected by proprietary protocols for advanced or multi-media services. Those proprietary protocols use end-to-end signalling for realizing the advanced or multi-media services in between at least two enterprise communication nodes. An enterprise communication node is located in an enterprise and has the task of performing communication with remote locations. A remote location is for example at least one other enterprise comprising another enterprise communication node. Examples of communications in between enterprises are proprietary protocols using end-to-end-signalling for realizing advanced or multi-media services which comprise signalling codes sent from a first communication node of a first enterprise to a second communication node of a second enterprise to be executed in the second enterprise. For instance, OXE nodes use ABC-F networking between nodes. Enterprise communication systems will soon be interconnected through the public Internet or operator IP wide area networks (WANs). A problem then may appear which is that used proprietary protocols must go through NAT (Network Address Translation) and firewalls of the public Internet or operator networks.

There exist several solutions to overcome the problem. For example, it is possible to use an ad-hoc connection of the Internet or operator network. That case, each enterprise side has to ask for a static IP-address on the Internet or operator network and open manually a TCP port in the enterprise. If the wide area network WAN is an operator network, the enterprise has to ask the operator to open a TCP port on its firewalls. This has the disadvantage to require provisioning.

It is also possible to solve the problem by the use of IP-VPN (Internet Protocol virtual private network) connections between enterprises. But IP-VPN that provide quality of service for voice traffic are expensive, especially when there are many medium and price areas to interconnect between each order. Even if IP-VPN is used, a back up through the public Internet is needed to secure the connection.

Another solution is described in US 7002912 B2 based on an integrated PBX and SIP (Session Initiation Protocol) telephony communications network supporting transmission of private signalling codes over SIP. A telephone emits a private signalling code for accessing a particular PBX function. An enhanced IP translator coupled to the telephone encapsulates the private signalling code within a SIP invite, request, response, information, notification message and/or instant message. The SIP message with the encapsulated private signalling codes is transmitted over a communication's network to a PBX. The PBX is also coupled to an enhanced IP translator that receives the SIP message and decapsulates the embedded private signalling codes. The codes are transmitted to the PBX for rendering a function for the telephone. A SIP user agent aware of the private signalling codes may also access functions provided by the PBX by capsulating-decapsulating private signalling codes into/from SIP messages. Such a solution has disadvantages like the use of propriety SIP extensions like SUBSCRIBE 170. Furthermore, it implies a quite high amount of signalling traffic, which is almost not admissible in most of the network operators. This is due to the fact that all the signalling (stimuli) is transferred via SIP. And all the servers from the network operator follow the same path to close the corresponding ports of the respective firewalls and to notify the end of the communication.

In EP 1613024 A1 a call server is described for establishing a bi-directional peer-to-peer communication link in between at least two user agents. The communication is established across a network via at least one network address translation device. The call servers exchange explore messages via the at least one network address translation device and analyze the transformation performed by the at least one network address translation device on the explore messages. The communication link in between the user agents is used for multimedia data exchange and Voice-over-IP applications.

### Summary of the invention

In due of the above, it is an object of the present invention to find a solution to interconnect enterprise communication systems avoiding the signalization servers from the network operator.

According to the invention, existing mechanisms for transport of user-to-user data of the network interconnecting enterprise communication systems are adapted in order to transport server-to-server data on the network interconnecting enterprise communication systems. The network interconnecting enterprise communication systems is usually not under the control of the communicating enterprise communication systems. It is therefore important to respect the rules of the network interconnecting enterprise communication systems. Usually it is also not possible for the enterprise communication systems or their administrators to make changes to networks interconnecting enterprise communication systems. For this invention, there are two examples of networks interconnecting enterprise communication systems are discussed: Internet-like networks, where NATs and firewalls do not implement ALGs (Application Level Gateway) and must rely on third party relays. Operator networks, where NATs and firewalls are tightly controlled thanks to ALG software that analyses the protocols and perform data relays for flows that cannot go from outside to inside the NAT otherwise. The invention presents two embodiments of the solution. Each solution is adapted to one of the network examples given above. In both cases, using the user-to-user data channel for transport of server-to-server information enables to benefit from the core network infrastructure (relays, ALGs) of the network interconnecting the enterprise communication systems.

The invention has the advantage that provisioning effort on the network is minimized. This is especially true for the edge and border equipments of the network that the end-to-end signalling, which may be specific to the communication nodes, has to traverse.

The object of the invention is achieved in accordance with the invention by a method for transmitting end-to-end signalling between communication nodes separated by a network. The method comprises the step to negotiate a connection between both nodes via the network; the connection being allocated dedicated ports and IP addresses. Then is setup a separate connection between both nodes using the above allocated ports and addresses to transmit media related data stream while using that separate connection to transmit end-to-end signalling codes for the transfer of an advanced signalling stream. In this context media related data stream means a data information flow being real-time and used for transporting data being rendered to a person and/or being the rendering of a life or registered communication by a person.

Advanced signalling stream is data information flow being real-time or best effort and used for transporting data exchange by PBX software functions . The latter corresponds to negotiation of features being associated to a communication, transition in logic, stimuli. The logic may then internally provide information to be rendered to a person. For example a pop-up notifies to the user that the user may ask some additional information of a colleagues before answering an audio, "media" or other call.

In an advantageous embodiment of the invention, the negotiated connection is performed using session initiation protocol (SIP). In an alternative, the allocation of ports and addresses is performed by the network address translation (NAT) of the respective private network from the nodes. Furthermore, it is also conceivable that the separate connection transits through a media relay.

The invention further relates to a computer readable medium comprising code to be executed on a communication node for transmitting end-to-end signalling codes to another communication node separated by a network. The code from the computer readable medium when executed negotiates a connection between both nodes via the network; the connection being allocated dedicated ports and addresses. The executed code further sets up a separate connection between both nodes using the above allocated ports and addresses to transmit media related data stream. Particularly, the computer readable medium comprises code when executed which uses that separate connection to transmit end-to-end signalling codes for the transfer of an advanced signalling stream, said advanced signalling stream being a real-time or best-effort data information flow used for transporting data exchange by PBX sofware function. In an alternative embodiment of the invention, the computer readable medium comprises code to setup the separate connection via a media relay.

Further advantageous embodiments of the invention are described in the dependent claims, the following descriptions and the drawings.

### Description of the drawings

An exemplary embodiment of the invention will now be explained further with the reference to the attached drawings in which:
Figure 1 is a schematic view of enterprise nodes exchanging multi media streams of the public Internet according to prior art;
Figure 2 is a schematic view of enterprise nodes exchanging multi media streams and advanced service signalling of a public Internet according to the invention;
Figure 3 is a schematic view of enterprise nodes exchanging multi media streams of an operator network according to prior art;
Figure 4 is a schematic view of enterprise nodes exchanging multi media streams and advanced service signalling of an operator network according to the invention.

### Detailed description of preferred embodiments

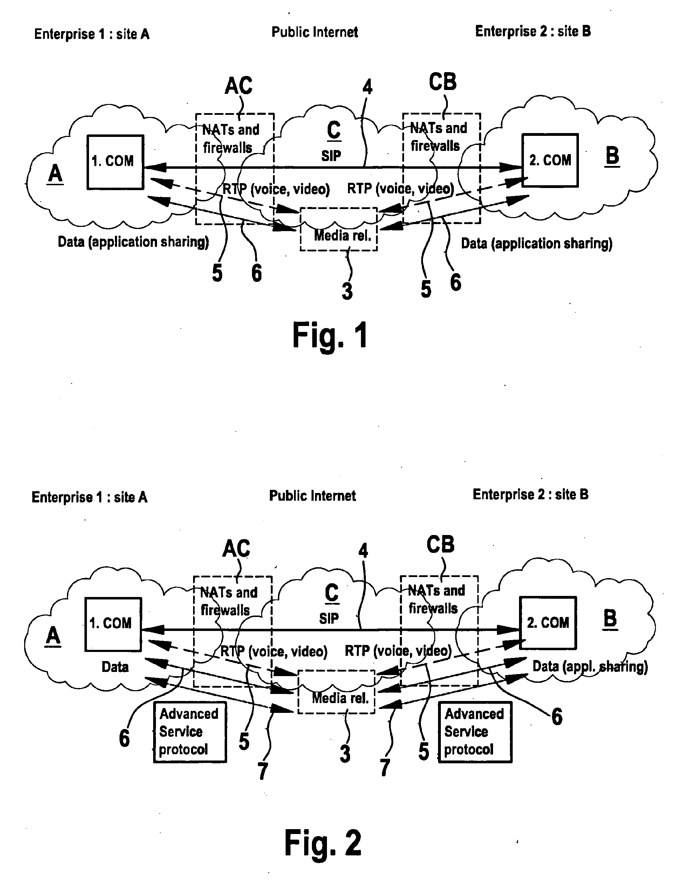

On figure 1 are shown three clouds A, B, C corresponding to a schematic view of respectively at the left enterprise 1 with reference sign A, at the right enterprise 2 with reference sign B and in-between the usual public internet C. Enterprise 1 and enterprise 2 correspond to two enterprise communication systems which are separated by the public internet C. Between the clouds A, B corresponding to enterprise 1 and enterprise 2 and the cloud C corresponding to the public internet is drawn a respective box AC, CB in dashed line corresponding to the NAT (network address translator) and firewalls to cross when data are transmitted from or received by a respective communication node 1.COM, 2.COM.

Below the cloud C in the middle corresponding to the public Internet is drawn a box in dashed line corresponding to the media relays 3.

On figure 1 is shown also a double dashed arrow 4 in full line between the communication node 1.COM from enterprise 1 and communication node 2.COM from enterprise 2 crossing both boxes AB, CB corresponding to the nets and firewalls and the cloud responding to the public internet C. That double dashed arrow 4 in full line corresponds to the first stage when data are transmitted from enterprise 1 to enterprise 2 or vice versa using session initiation protocol (SIP). That stage corresponds to a kind of initiation to achieve to interconnect both communication nodes 1.COM, 2.COM while traversing the public Internet C. This is particular relevant when a voice and/or video communication is to be setup between a communication node 1.COM at enterprise 1 and a communication node 2.COM at enterprise 2. Once the initiation is performed using e.g. a SIP - other protocols could be also used there - then a different and more suitable path through the media relays 3 is used to transfer the data corresponding to the voice and/or the video and even application sharing is possible. This is shown on figure 1 by the double dashed headed arrow 5 in dashed line between a communication node and the media relays for the voice, video using real time protocol (RTP) or the double dashed headed arrows 6 in dotted line for the purely data usually corresponding to application shoring and also between the communication node and the media relays.

On figure 2 is shown a similar diagram as on figure 1 with the two clouds A, B for the enterprise 1 and enterprise 2 and a third cloud in-between for the public Internet C. As on figure 1 is shown also in dashed line the nets and firewalls AC, BC between the enterprise clouds A, B and the public internet C and below the public internet C also the media relays box 3. And as on figure 1 a communication between a node in enterprise 1 and enterprise 2 is initiated first by the exchange of information using SIP shown by the double dashed headed arrow 4 in full line. Afterwards is built a more adapted path towards the media relays 3 for the transfer of voice, video, data and now particularly also for the transfer of advanced service protocol according to the invention. The double-headed arrows 7 show the transfer of advanced service protocol. Therefore, when implementing the method according to the invention it is possible to interconnect two nodes 1.COM, 2.COM each on different sides namely A and B corresponding respectively to enterprise 1 and enterprise 2 separated by the public internet C. Such interconnection can be advantageously used to transfer specific data that deal with logic i. e. negotiation of features being associated to a communication, transitions in logic, stimuli between terminal in fact typical software functions usually managed by a private branch exchange open (PBX) in proprietary protocol.

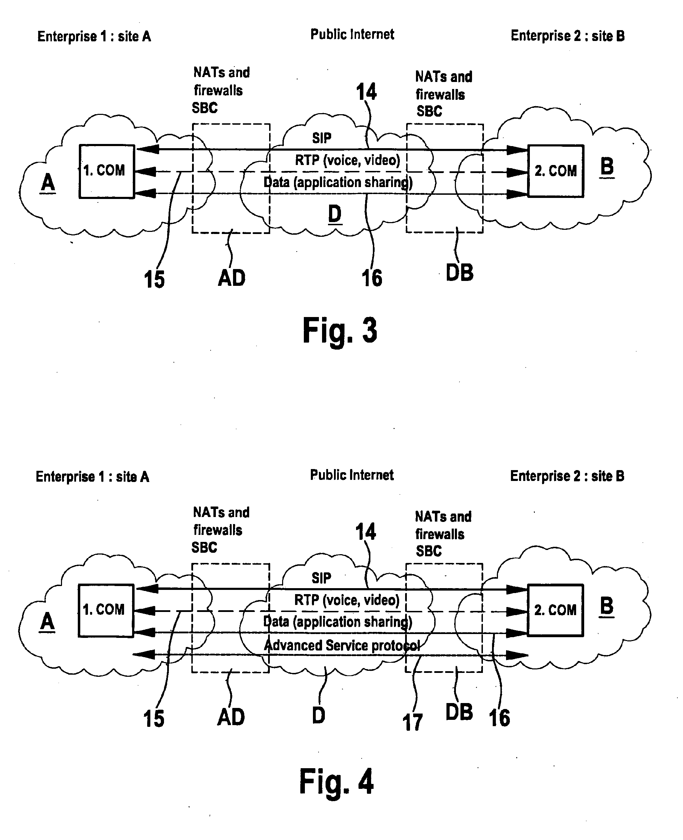

Shown in figure 3 are the two clouds A, B corresponding to enterprise 1 and enterprise 2 and a cloud D corresponding to on operator network. Also between the clouds A, B are shown boxes in dashed line corresponding to the NATs and firewalls AD, DB as well as session border controllers. The NATs and firewalls AD, DB as well as session border controllers. The NATs and firewalls AD and DB have to be passed by data which is sent from the communication node 1.COM of enterprises 1 over the network D to the communication node 2.COM of enterprise 2 or which is sent from the communication node 2.COM of enterprise 2 over the network D to the communication node 1.COM of enterprise 1.

Again like for the public internet an interconnection between a communication node in enterprise 1 and a communication node enterprise 2 can be setup using SIP as shown with the double dash headed arrow 14 in full line. Once the interconnection between the 2 communication nodes 1.COM, 2.COM through the operator network D is setup then voice and/or video as well as data corresponding to application sharing can be exchanged - symbolized in the figures by arrows 15 and 16. For voice and/or video RTP is used as shown by the double dash headed arrow 15 in dashed line. And for data corresponding to application sharing a similar direct path is used as shown by the double dashed headed arrow 16 in dotted line.

On figure 4 is shown a similar schematic architecture as on figure 3 but now with the use of the direct path 17 to exchange advanced service protocol between both communication nodes 1.COM, 2.COM from enterprise 1 and enterprise 2. When the interconnection is performed via an operator network D then usually the data for advanced service protocol are transmitted without crossing any media relays.

The implementation of the method according to the invention has the big advantage to leverage NAT and firewall traversal mechanisms without extra provisioning. In such a way a sharing or control of features associated to a communication, transitions in logic or stimuli can be easily performed between communication nodes separated by the public Internet C or some operator network D.

## Claims

1. A method for transmitting end-to-end signalling between communication nodes (1.COM, 2.COM) separated by a network (C, D), the method comprises the following steps:
• negotiating a connection between both nodes (1.COM, 2.COM) via the network (C, D), the connection being allocated dedicated ports and addresses, the negotiating being performed by exchanging information in between both nodes (1.COM, 2.COM) over the network (C, D);
• setting up a separate connection between both nodes using the above allocated ports and addresses to transmit media related data stream;
**characterised by**
• using said separate connection to transmit end-to-end signalling codes for the transfer of on advanced signalling stream, said advanced signalling stream being a real-time or best effort data information flow used for transporting data exchange by PBX software functions.

2. The transmission method according to claim 1 whereby the negotiated connection is performed using Session Initiation Protocol (SIP).

3. The transmission method according to claim 1 whereby the allocation of ports and addresses is performed by the Network Address Translation (NAT) of the respective private network from the nodes.

4. The transmission method according to claim 1 whereby the separate connection transits through a media relay (3).

5. A computer readable medium comprising code to be executed on a communication node (1.COM, 2.COM) for transmitting end-to-end signalling codes to another communication node separated by a network (C, D), while the code from the computer readable medium when executed negotiates a connection between both nodes via the network (C, D) by exchanging information in between both nodes (1.COM, 2.COM) over the network (C, D), the connection being allocated to dedicated ports and addresses, the code further sets up a separate connection between both nodes using the above allocated ports and addresses to transmit media related data stream, the computer readable medium being **characterised by** comprising code which, when executed, uses said separate connection to transmit end-to-end signalling codes for the transfer of an advanced signalling stream, said advanced signalling stream being a real-time or best effort data information flow used for transporting data exchange by PBX software functions.

6. The computer readable medium according to claim 5 whereby the setting up of the separate connection is performed via a media relay (3).

## Patentansprüche

1. Ein Verfahren zum Übertragen einer Ende-zu-Ende-Signalisierung zwischen durch ein Netzwerk (C, D) getrennten Kommunikationsknoten (1.COM, 2.COM), wobei das Verfahren die folgenden Schritte umfasst:
• Aushandeln einer Verbindung zwischen den beiden Knoten (1.COM, 2.COM) über das Netzwerk (C, D), wobei der Verbindung dedizierte Ports und Adressen zugeordnet werden, wobei das Aushandeln durch den Austausch von Informationen zwischen den beiden Knoten (1.COM, 2.COM) über das Netzwerk (C, D) erfolgt;
• Aufbauen einer separaten Verbindung zwischen den beiden Knoten unter Verwendung der vorstehend erwähnten zugeordneten Ports und Adressen für die Übertragung eines mediabezogenen Datenstroms;
**gekennzeichnet durch**
• das Verwenden der besagten separaten Verbindung zum Übertragen von Ende-zu-Ende-Signalisierungscodes für die Weiterleitung eines erweiterten Signalisierungsstroms, wobei der besagte erweiterte Signalisierungsstrom ein für den Transport des Datenaustausches anhand von PBX-Software-Funktionen verwendeter Echtzeit- oder Best-Effort-Dateninformationsfluss ist.

2. Das Übertragungsverfahren nach Anspruch 1, wobei die ausgehandelte Verbindung unter Anwendung eines Sitzungsaufbau-Protokolls (SIP) durchgeführt wird.

3. Das Übertragungsverfahren nach Anspruch 1, wobei das Zuordnen von Ports und Adressen durch die Netzwerk-Adressumsetzung (NAT) des entsprechenden privaten Netzwerks von den Knoten erfolgt.

4. Das Übertragungsverfahren nach Anspruch 1, wobei die separate Verbindung ein Media-Relais (3) durchquert.

5. Ein computerlesbares Medium mit einem auf einem Kommunikationsknoten (1.COM, 2.COM) auszuführenden Code für die Übertragung von Ende-zu-Ende-Signalisierungscodes an einen anderen, durch ein Netzwerk (C, D) getrennten Kommunikationsknoten, wobei der Code des computerlesbaren Mediums bei dessen Ausführung eine Verbindung zwischen den beiden Knoten über das Netzwerk (C, D) durch Austauschen von Informationen zwischen den beiden Knoten (1.COM, 2.COM) aushandelt, wobei die Verbindung dedizierten Ports und Adressen zugeordnet wird, wobei der Code weiterhin eine separate Verbindung zwischen den beiden Knoten unter Verwendung der vorstehend erwähnten zugeordneten Ports und Adressen aufbaut, um einen mediabezogenen Datenstrom zu übertragen, wobei das computerlesbare Medium **dadurch gekennzeichnet ist, dass** es einen Code umfasst, welcher bei dessen Ausführung die besagte separate Verbindung benutzt, um Ende-zu-Ende-Signalisierungscodes für die Weiterleitung eines erweiterten Signalisierungsstroms zu übertragen, wobei der besagte erweiterte Signalisierungsstrom ein für den Transport des Datenaustauschs anhand von PBX-Software-Funktionen verwendeter Echtzeit- oder Best-Effort-Dateninformationsfluss ist.

6. Das computerlesbare Medium nach Anspruch 5, wobei der Aufbau der separaten Verbindung über ein Media-Relais (3) erfolgt.

## Revendications

1. Procédé de transmission d'une signalisation de bout-en-bout entre des noeuds de communication (1.COM, 2.COM) séparés par un réseau (C, D), le procédé comprend les étapes suivantes :
• négocier une connexion entre deux noeuds (1.COM, 2.COM) par l'intermédiaire du réseau (C, D), des ports et des adresses dédiés étant attribués à la connexion, la négociation étant réalisée en échangeant des informations entre les deux noeuds (1.COM, 2.COM) sur le réseau (C, D) ;
• établir une connexion séparée entre les deux noeuds en utilisant les ports et adresses attribués ci-dessus pour transmettre un flux de données multimédia ;
**caractérisé par**
• l'utilisation de ladite connexion séparée pour transmettre des codes de signalisation de bout-en-bout pour le transfert d'un flux de signalisation avancé, ledit flux de signalisation avancé étant un flux d'informations de données en temps réel ou de données reçues dans les meilleurs délais utilisé pour acheminer l'échange des données au moyen des fonctions du logiciel PBX.

2. Procédé de transmission selon la revendication 1, grâce auquel la connexion négociée est réalisée en utilisant un protocole d'initiation de session (SIP).

3. Procédé de transmission selon la revendication 1, grâce auquel l'attribution de ports et d'adresses est réalisée par la traduction des adresses réseau (NAT) du réseau privé respectif des noeuds.

4. Procédé de transmission selon la revendication 1, grâce auquel la connexion séparée transite à travers un relais multimédia (3).

5. Support lisible par ordinateur comprenant un code devant être exécuté sur un noeud de communication (1.COM, 2.COM) pour transmettre des codes de signalisation de bout-en-bout à un autre noeud de communication séparé par un réseau (C, D), tandis que le code du support lisible par ordinateur, lorsqu'il est exécuté, négocie une connexion entre deux noeuds par l'intermédiaire du réseau (C, D) en échangeant des informations entre les deux noeuds (1.COM, 2.COM) sur le réseau (C, D), la connexion étant attribuée à des ports et à des adresses dédiés, le code établit en outre une connexion séparée entre les deux noeuds en utilisant les ports et les adresses attribués ci-dessus pour transmettre un flux de données multimédia, le support lisible par ordinateur étant **caractérisé en ce qu'**il comprend un code qui, lorsqu'il est exécuté, utilise ladite connexion séparée pour transmettre des codes de signalisation de bout-en-bout pour le transfert d'un flux de signalisation avancé, ledit flux de signalisation avancé étant un flux d'informations de données en temps réel ou de données reçues dans les meilleurs délais utilisé pour acheminer l'échange des données au moyen des fonctions du logiciel PBX.

6. Support lisible par ordinateur selon la revendication 5 grâce auquel l'établissement de la connexion séparée est réalisé par l'intermédiaire d'un relais multimédia (3).
